# EUROPEAN PATENT APPLICATION

(11) **EP 4 053 866 A1**
(43) Date of publication of application: **07.09.2022**
(21) Application number: 20882048.0
(22) Date of filing: 19.10.2020
(51) Int. Cl.: H01G 4/32

(54) **FILM CAPACITOR ELEMENT**

(30) Priority: 30.10.2019 JP 2019197888
(71) Applicant: Kyocera Corporation, Kyoto-shi Kyoto 612-8501 (JP)
(72) Inventor: TATEISHI, Tatsuya, Kyoto-shi, Kyoto 612-8501 (JP)
(74) Representative: Viering, Jentschura & Partner mbB Patent- und Rechtsanwälte
(86) International application number: PCT/JP2020/039277
(87) International publication number: WO 2021/085219

(57) **Abstract**

A film capacitor device includes a film stack with metal layers including adjacent metal layers in 180° opposite orientations in a direction in which the metal layers continuously extend, a first metal electrode, and a second metal electrode. The first metal electrode and the second metal electrode are on a pair of end faces of the film stack. The metal layer includes a common metal layer and a plurality of metal strips electrically connected to the common metal layer. At least one of a pair of end faces of the film stack in y-direction includes a recess continuously extending in a film stacking direction and separating the film stack from the first metal electrode.

## Description

### FIELD

The present disclosure relates to a film capacitor device.

### BACKGROUND

A known technique is described in, for example, Patent Literature 1.

### CITATION LIST

### PATENT LITERATURE

Patent Literature 1: Japanese Patent No. 5984097

### BRIEF SUMMARY

A film capacitor device according to an aspect of the present disclosure includes a film stack being rectangular, a first metal electrode, and a second metal electrode. The film includes a plurality of dielectric films being stacked. Each of the plurality of dielectric films including a metal layer on a surface of the dielectric film and includes, at an edge of the surface of the dielectric film in a first direction, an edge insulation area continuously extending in a second direction perpendicular to the first direction. The plurality of dielectric films include adjacent dielectric films in 180° opposite orientations in the first direction on the surface and alternate dielectric films having the edge insulation areas overlapping in a plan view. The first metal electrode and the second metal electrode are on a pair of end faces of the film stack in the first direction. The metal layer is electrically connected to at least the first metal electrode or the second metal electrode. The metal layer electrically connected at least to the first metal electrode includes a common metal layer and a plurality of metal strips. The common metal layer is located on another end of the surface in the first direction and extends in the second direction. The plurality of metal strips extend in the first direction and are electrically connected to the common metal layer. At least one of a pair of end faces of the film stack in the second direction includes a recess continuously extending in a direction in which the plurality of dielectric films are stacked and separating the film stack from the first metal electrode.

The objects, features, and advantages of the present disclosure will become more apparent from the following detailed description and the drawings.

### BRIEF DESCRIPTION OF DRAWINGS

FIG. 1A is a plan view of a film capacitor device according to an embodiment showing metalized dielectric films.
FIG. 1B is a schematic cross-sectional view of the film capacitor device showing stacked films.
FIG. 1C is a plan view of the film capacitor device viewed from above.
FIG. 2A is a cross-sectional view of a film capacitor device showing the positions of recesses.
FIG. 2B is a plan view of the film capacitor device showing the positions of the recesses.
FIG. 3A is a plan view of a film capacitor device according to another embodiment showing the positions of recesses.
FIG. 3B is a plan view of a film capacitor device according to another embodiment showing the positions of recesses.
FIG. 3C is a plan view of a film capacitor device according to another embodiment showing the positions of recesses.
FIG. 4A is a plan view of a dielectric film including a metal layer in a different pattern.
FIG. 4B is a schematic cross-sectional view of a film stack including the dielectric films including the metal layers in the different pattern.
FIG. 5 is an exploded perspective view describing a method for manufacturing a film capacitor device according to an embodiment.
FIG. 6 is an external perspective view of the device including the stacked films.
FIG. 7 is an external perspective view of the device including metal electrodes formed by thermal spraying.
FIG. 8 is an external perspective view of the device having recesses for insulation showing the positions of the recesses.
FIG. 9 is a view of a device according to another embodiment having recesses for insulation at different positions.
FIG. 10 is a view of a device according to another embodiment having recesses for insulation at different positions.

### DETAILED DESCRIPTION

A film capacitor with the structure that forms the basis of a film capacitor device according to one or more embodiments of the present disclosure includes either a wound metalized film or metalized films stacked in one direction, which are metal films to be an electrode formed by vapor deposition, on the surface of a dielectric film of, for example, a polypropylene resin.

When a stacked film capacitor is cut into an appropriate size from a stack of metalized films, the metal films are cut together with the dielectric film. The metal films can come in contact with one another at the cut surface and may cause an insulation failure.

In a film capacitor device described in Patent Literature 1, metalized films have exposed film surface portions called insulation margins including no metal film and including grooves or strips with a uniform width (gap strips). These surface portions may include bends that extend obliquely to the direction parallel to the direction in which the insulation margins extend to improve the withstanding pressure at the cut surface of the stack of the metalized films.

However, the stacked film capacitor described in Patent Literature 1 may have much capacitance loss at around the cut surface of the film stack.

One or more aspects of the present disclosure are directed to a stacked film capacitor device with less capacitance loss.

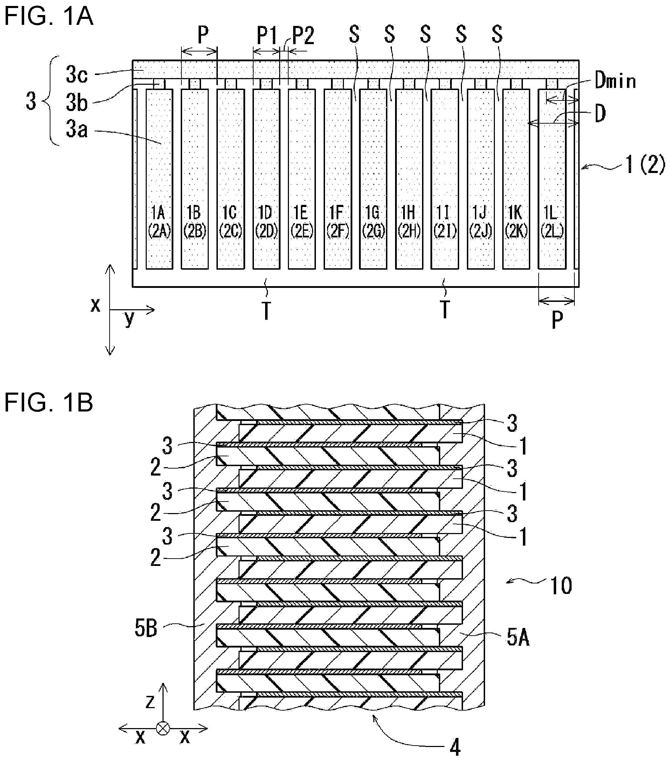

A film capacitor device according to one or more embodiments will now be described with reference to the drawings. As shown in FIG. 1A, a film capacitor device 10 according to an embodiment includes, on one surface of a base film, multiple dielectric films 1 and 2 that are stacked alternately. Each of the dielectric films 1 and 2 includes a metal layer 3.

In the present embodiment, the metal layer 3 is an interdigital metal layer including multiple metal strips 3a and one common metal layer 3c. The metal strips 3a are electrically connected to the common metal layer 3c. The metal layer 3 may further include, between the metal strips 3a and the common metal layer 3c, connecting portions 3b that connect the metal strips 3a and the common metal layer 3c together. Each connecting portion 3b connects an end of the metal strip 3a to a side of the common metal layer 3c.

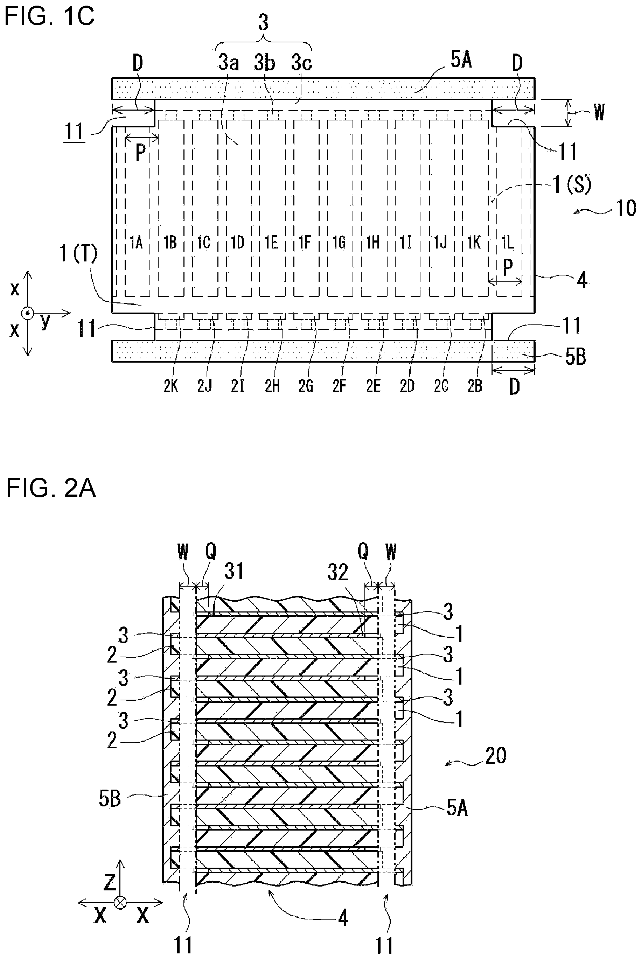

After being stacked, the metal strips 3 serve as internal electrodes of the capacitor. The dielectric films 1 and 2 have the same structure as the structures shown in FIG. 1B and subsequent figures with the difference being their stacking orientations. To indicate the orientations in the stacked structure, the metal strips 3a are denoted with numerals 1A to 1L or numerals 2A to 2L in this order from an end of the dielectric film as shown in FIGs. 1A and 1C.

In the figures, the direction in which the metal strips 3a extend parallel to one another is referred to as a first direction (x-direction), and the direction in which the metal strips 3a align parallel to one another (y-direction perpendicular to x-direction) is referred to as a second direction. The films are stacked on one another in a third direction (z-direction in the figures) perpendicular to the first and second directions. The obtained stack, or a film stack 4, will be described in detail later.

The metal strips 3a on the surface of each of the dielectric films 1 and 2 are formed by depositing metal on a base film by vapor deposition. Each of the dielectric films 1 and 2 has surface portions each exposed between the metal strips 3a adjacent to each other in y-direction (hereafter, insulation margins S). The metal strips 3a are thus electrically insulated from one another. Each of the insulation margins S is continuous with an edge insulation area T at an end of the dielectric film in the first direction (x-direction). The edge insulation area T continuously extends in the second direction (y-direction). The interval (pitch P) between the insulation margins S is equal to the sum of a width P1 of one metal strip 3a in y-direction and a width P2 of one insulation margin S in y-direction (P = P1 + P2).

The common metal layer 3c is opposite to the edge insulation area T, or more specifically, at the other end of the dielectric films 1 or 2 in the first direction. The common metal layer 3c extends in the second direction. The metal strips 3a are electrically insulated from one another by the insulation margins S. However, the metal strips 3a are connected to the single common metal layer 3c to allow the metal layer 3 to be electrically conductive across the metal layer 3. For the metal layer 3 including the connecting portions 3b, each connecting portion 3b has the center in the width direction aligned with the center of the corresponding metal strip 3a in the width direction. Each connecting portion 3b has the length (width) in the second direction shorter (smaller) than the length (width) of each metal strip 3a in the second direction. Each connecting portion 3b functions as a fuse for the corresponding metal strip 3a. When, for example, dielectric breakdown in the base film causes one metal strip 3a to be short-circuited with another metal strip 3a with flow of a current exceeding a specified level, the corresponding connecting portion 3b burns out and causes wire breakage, thus preventing the film capacitor device 10 from disabling its entire functions.

The base film for the dielectric film 1 or 2 may be formed from an organic resin material such as polypropylene, polyethylene terephthalate, polyarylate, or cyclic olefin polymer.

As shown in FIG. 1B, the film stack 4 includes the dielectric films 1 and 2 that are adjacent to each other in the vertical direction (z-direction) in the figure and are stacked alternately in 180° opposite orientations in x-direction. More specifically, the dielectric films 1 and 2 are stacked on one another to have their edge insulation areas T each located at an end of the corresponding dielectric film to be alternately opposite to each other in x-direction. Similarly, the dielectric films 1 and 2 are stacked on one another to have the common metal layers 3c each located at another end of the corresponding dielectric film 1 or 2 to be alternately opposite to each other in x-direction.

The film stack 4 includes, on its two end faces in x-direction, metal electrodes that are formed by metal thermal spraying (hereafter, metal-sprayed electrodes). A metal-sprayed electrode at one end in x-direction is referred to as a metal-sprayed electrode 5A (first metal electrode), and a metal-sprayed electrode at the other end in x-direction is referred to as a metal-sprayed electrode 5B (second metal electrode). These electrodes are at different positions but have the same structure. For example, the metal-sprayed electrode 5A is electrically connected to the common metal layer 3c on the dielectric film 1, and is also electrically connected to each metal strip 3a through the common metal layer 3c. The metal layer 3 on the dielectric film 1 and the metal-sprayed electrode 5A are electrically insulated by the edge insulation area T. The metal-sprayed electrode 5B is electrically connected to the common metal layer 3c on the dielectric film 2, and is also electrically connected to each metal strip 3a through the common metal layer 3c. The metal layer 3 on the dielectric film 2 and the metal-sprayed electrode 5B are electrically insulated by the edge insulation area T. Electrically connecting the metal-sprayed electrode 5A or 5B and the common metal layer 3c reliably allows the metal strips 3a to connect to the metal-sprayed electrode 5A or 5B through the common metal layer 3c.

The film capacitor device 10 according to the embodiment including the metal-sprayed electrodes 5A and 5B has, at its two ends in y-direction (second direction), recesses 11 that separate the metal strips 3a (internal electrodes) from the metal-sprayed electrodes 5A and 5B (external electrodes) as shown in FIG. 1C. In the present embodiment, the film capacitor device 10 has four recesses 11 in total, which are two recesses 11 at one end of the film stack 4 in x-direction and two recesses 11 at the other end.

Each recess 11 continuously extends in the stacking direction of the film (z-direction) between the metal-sprayed electrode 5A or 5B and the film stack 4, in an area including the interface (boundary) between the metal-sprayed electrode 5A or 5B and the film stack 4, or in an area of the connecting portion 3b. The recess 11 is open to an end face of the film stack 4 in y-direction and has a depth D (y-direction) from the end face in y-direction greater than the pitch P, which is the interval between the insulation margins S as described above. The recess 11 has a width W (in x-direction) at the end face in y-direction greater than the width of the common metal layer 3c. In the structure including the connecting portions 3b, the recess 11 has the width W (x-direction) greater than the smaller one of the width of the insulation margin S in y-direction and the width of the connecting portion 3b in x-direction. In this structure, each recess 11 electrically insulates at least one metal strip 3a located at each of the two ends in y-direction from the metal-sprayed electrode 5A or 5B.

In the structure including the connecting portions 3b as in the present embodiment, the depth D of each recess 11 from the end face of the film stack 4 in y-direction is greater than the value Dmin = (P1/2) + P2 + (P3/2), which is the sum of 1/2 of the width P1 of the metal strip 3a in y-direction (P1/2) and the width P2 of each insulation margin S in y-direction ((P1/2) + P2), and further 1/2 of the width P3 of the connecting portion 3b in y-direction (P3/2). In this structure, each recess 11 electrically insulates at least one metal strip 3a located at each of the two ends in y-direction from the metal-sprayed electrode 5A or 5B.

More specifically, the film capacitor device 10 has the recesses 11 that separate and electrically insulate one or two of the metal strips 3a at each end of the stacked dielectric film 1 in y-direction from the metal-sprayed electrode 5Ain FIG. 1C. For example, the separated and electrically insulated metal strips 3a may be at positions 1A and 1B at the left end in the figure and at positions 1K and 1L at the right end in the figure. In the same manner, the recesses 11 separate and electrically insulate one or two metal strips 3a located at each end of the stacked dielectric film 2 in y-direction from the metal-sprayed electrodes 5A and 5B in FIG. 1C. For example, the separated and electrically insulated metal strips 3a may be at positions 2K and 2L at the left end not shown in the figure and at positions 2A and 2B at the right end also not shown in the figure.

In other words, a film capacitor including the above film capacitor device 10 may include the metal strips 3a that linearly extend in x-direction. This structure includes fewer metal strips 3a to be cut or insulated at each end in y-direction. The film capacitor according to the embodiment thus has less capacitance loss at around the cut surface of the stack (each end in y-direction) than a film capacitor with the structure that forms the basis of the film capacitor device according to one or more embodiments of the present disclosure including a device with oblique insulation margins (refer to Patent Literature 1).

One or two metal strips 3a at each end in y-direction may be cut to the depth D from the end face in y-direction to allow appropriate insulation with the recesses 11. More specifically, each recess 11 may have the depth D about one to three times the pitch P of the insulation margin S as shown in the upper-right area of FIG. 1A. At least one of the metal strips 3a at each end in y-direction may thus be reliably insulated, with the metal strip 3a at the end in y-direction having any width or the width P1 in y-direction of 1A, 2A, 1L, and 2L that varies depending on the cutting position of the film stack 4 in this example. As described above for the structure including the connecting portions 3b, the depth D of each recess 11 may be greater than the value Dmin = (P1/2) + P2 + (P3/2) and less than or equal to the value obtained by adding twice the pitch P to the value Dmin.

The positions of the recesses 11 in x-direction (first direction) will be described later, together with the internal structure of the film stack 4.

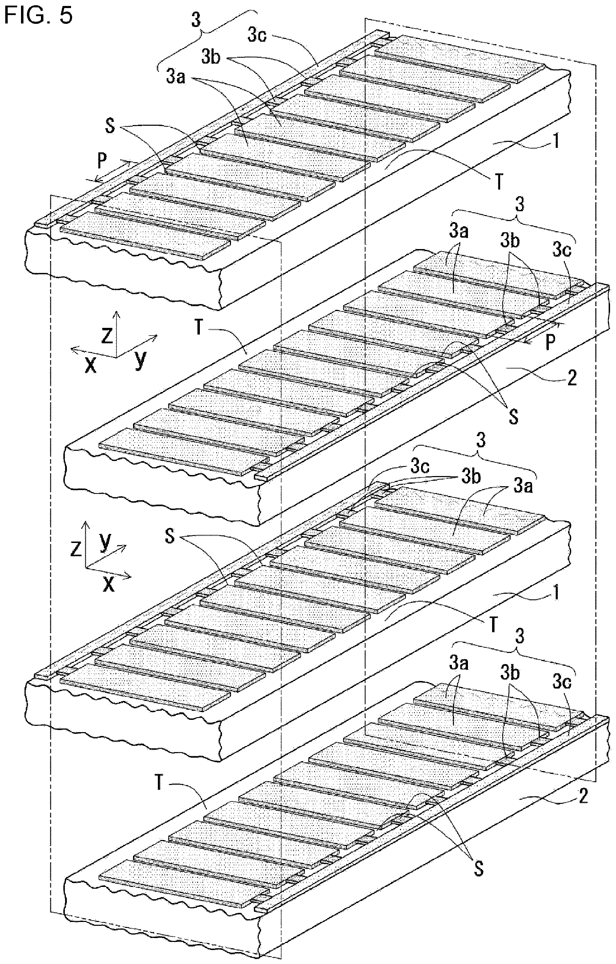

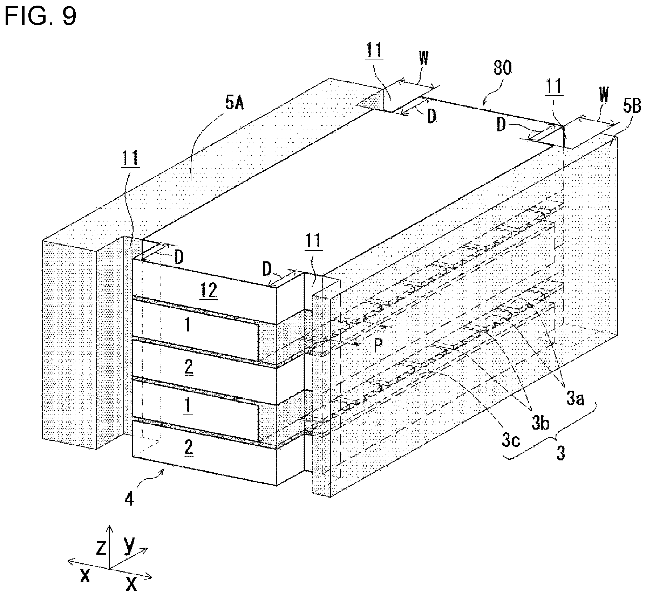

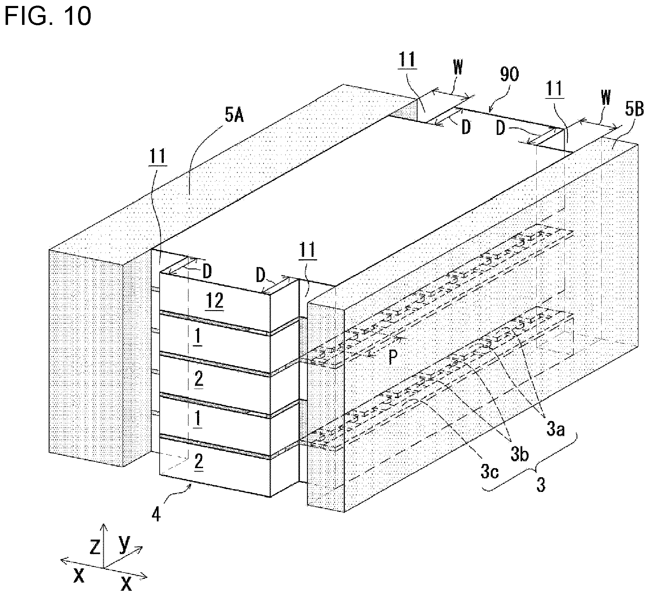

FIGs. 5 to 8 are schematic views showing a process for manufacturing a film capacitor device according to an embodiment. In FIGs. 5 to 8 showing the structure in a second embodiment and in FIGs. 9 and 10 showing structures in modifications, the direction in which the metal strips 3a continuously extend parallel to one another is referred to as the first direction (x-direction in the figures), the direction in which the common metal layer 3c extends (y-direction perpendicular to x-direction) is referred to as the second direction, and the film stacking direction perpendicular to the first and second directions is referred to as the third direction (z-direction in the figures) as in FIGs. 1A to 1C.

The process for manufacturing a stacked film capacitor device 70 will now be described. As shown in FIG. 5, multiple dielectric films 1 and 2 each including multiple metal strips 3a that continuously extend in x-direction and the common metal layer 3c extending in y-direction on its surface are first stacked alternately in opposite orientations in x-direction. More specifically, the stacked dielectric films 1 and 2 include adjacent dielectric films in 180° opposite orientations in x-direction (first direction) and alternate dielectric films having their edge insulation areas T overlapping in a plan view.

As described above, the dielectric films 1 and 2 have the same structure but different orientations in x-direction. The elongated dielectric films 1 and 2 may be stacked with a known method, such as winding the films around a cylindrical core or a polygonal core. The imaginary lines (two-dot chain lines) in FIG. 5 indicate the lines along which the films wound around a cylinder or another core are to be cut.

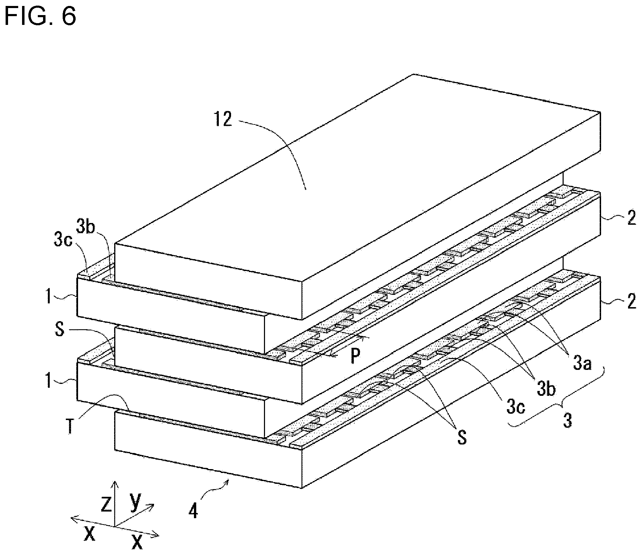

FIG. 6 is a view of the film stack 4 cut into a predetermined length as viewed from the cut surface (end face in y-direction). As shown in FIG. 6, the vertically adjacent dielectric films 1 and 2 are slightly displaced (offset) from each other in x-direction in the stacked structure. The common metal layer 3c is thus exposed at the corresponding end face of the film stack 4 in x-direction.

The film stack 4 in the embodiment includes an insulating layer 12 on its upper surface. The insulating layer 12 includes, for example, a dielectric film with no metal layer 3 and serving as a protective layer for the stack. The insulating layer 12 may be eliminated.

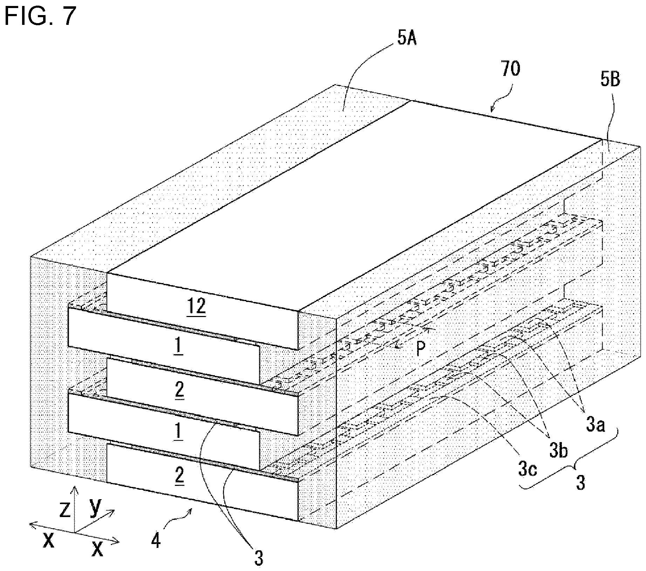

As shown in FIG. 7, the first metal electrode (metal-sprayed electrode 5A) and the second metal electrode (metal-sprayed electrode 5B) are then formed by metal thermal spraying onto the two end faces of the film stack 4 in x-direction. The common metal layer 3c has its end exposed at the corresponding end face as described above. The metal strips 3a on the dielectric films 1 and 2 are thus electrically connected to the corresponding metal-sprayed electrode 5A or 5B through the common metal layer 3c to function as internal electrodes of the device.

In the film capacitor device 70 according to a second embodiment, the recesses 11 are formed on the two end faces of the film stack 4 in y-direction, which are the cut surfaces of the stack. The recesses 11 are open to the end faces in y-direction, and separate and electrically insulate the metal strips 3a at the cut surfaces from the metal-sprayed electrodes 5A and 5B. In the present embodiment as well, the film capacitor device 70 includes four recesses 11 in total, which are two recesses 11 at one end of the film stack 4 in y-direction and two recesses 11 at the other end.

The recesses 11 may be formed to continuously extend in the stacking direction (z-direction) by, for example, machining or cutting. The recesses 11 may be, for example, cutouts, slits, or notches.

Each recess 11 may have the depth D in y-direction at least greater than the pitch P, which is the sum of the width of one metal strip 3a and the width of one insulation margin S. More specifically, the recess 11 may have the depth about one to three times the pitch P to insulate one or two metal strips 3a at each end in y-direction. The recess 11 may have the depth less than or equal to three times the pitch P to avoid increase in the capacitance loss at the ends. For the recess 11 formed nearer the common metal layer 3c, the width W in x-direction may be greater than the width of the common metal layer 3c in x-direction. For the recess 11 formed nearer the metal strips 3a, the width W in x-direction may be greater than the smaller one of the width of one insulation margin S in y-direction and the width of one connecting portion 3b in x-direction.

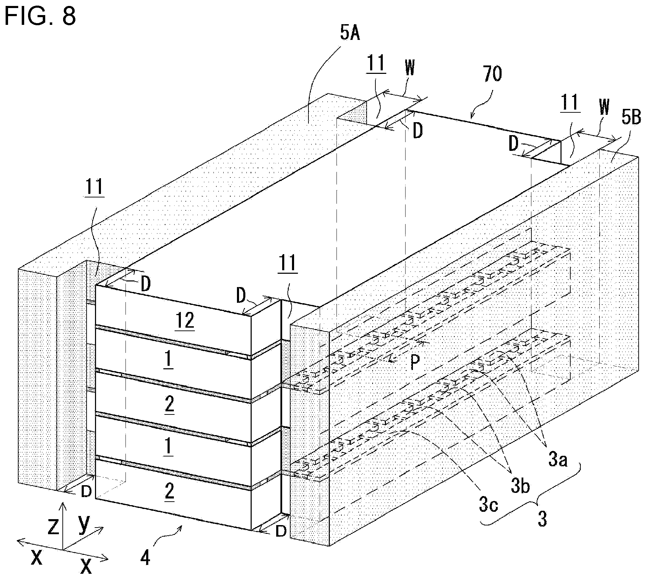

The recesses 11 may be between the film stack 4 and the metal-sprayed electrode 5A or 5B in x-direction as in a film capacitor device 20 shown in FIG. 8 or may be in an area including the interface (boundary) between the metal-sprayed electrode 5A or 5B and the film stack 4 as in a film capacitor device 80 shown in FIG. 9. In a film capacitor device 90 shown in FIG. 10 in another embodiment, the recesses 11 at the two ends may be in the film stack 4 in an area adjacent to the interface between the metal-sprayed electrode 5A or 5B and the film stack 4.

Any of the above structures may produce the same advantageous effects. The metal strips 3a and the common metal layer 3c on the dielectric film 1 or the metal strips 3a and the common metal layer 3c on the dielectric film 2 are exposed at the inner surface of each recess 11. As shown in FIG. 2A, each recess 11 is at a distance Q in x-direction from the corresponding end 31 on the dielectric film 1 or from the corresponding end 32 on the dielectric film 2 of another metal strip 3a that is not exposed at the inner surface of the recess 11.

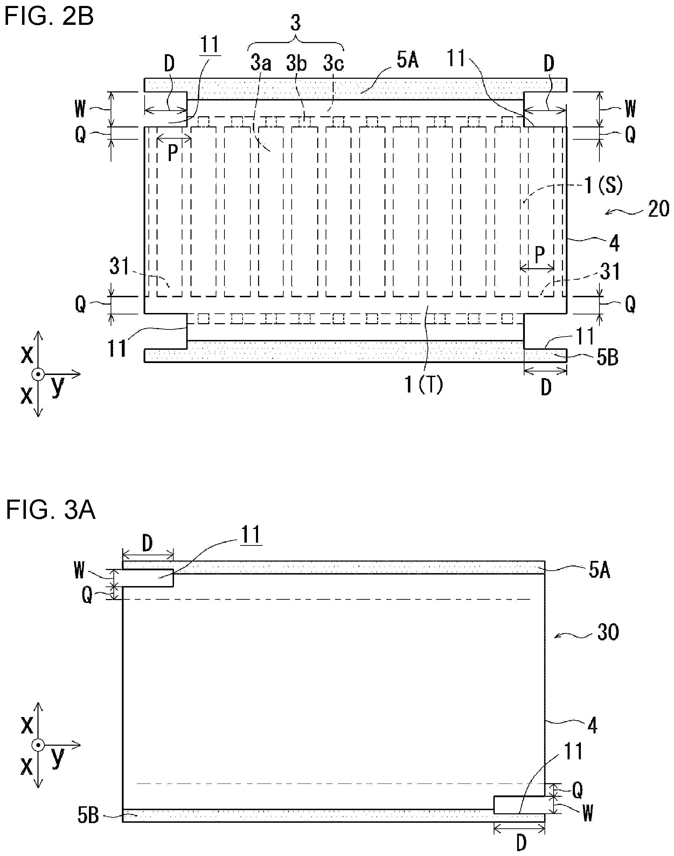

FIG. 2B is a plan view of the film capacitor device 20 viewed from above showing the positions of the recesses 11 in x-direction. As shown in the lower half of the figure, the ends 31 of the metal strips 3a on the dielectric film 1 are located inside the film stack 4 in x-direction. The above recesses 11 are thus located outward from the ends 31 with the distance Q (adjacent to the metal-sprayed electrode 5A). This structure provides reliable electrical insulation from the internal electrodes (metal strips 3a). The distance Q between the recesses 11 and the ends 31 or 32 of the metal strips 3a may be at least 200 µm.

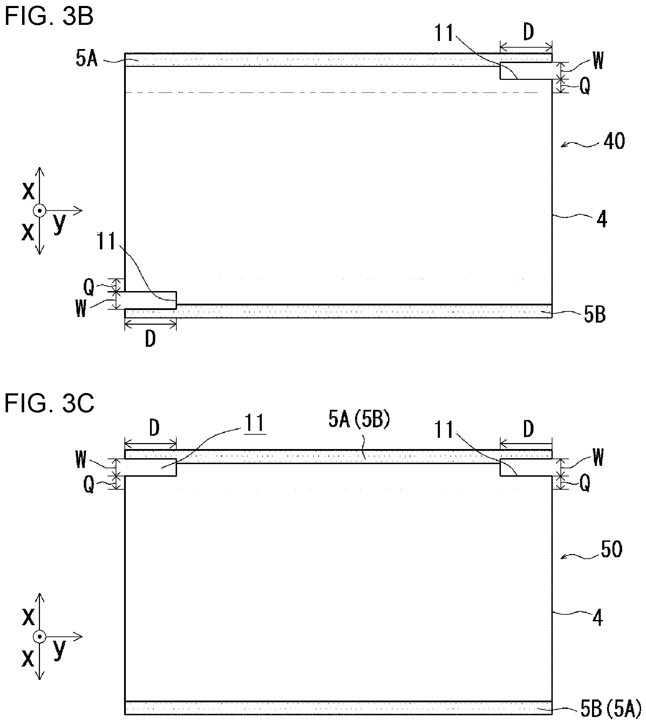

In each of the embodiments described with reference to FIGs. 1A to 1C, 2A, 2B, and 8 to 10, the structure includes the four recesses 11 in total, which are two recesses 11 at each end in x-direction and in y-direction. In other embodiments, the structure may include two recesses 11 in total as shown in FIGs. 3A to 3C, which are the recesses 11 between the film stack 4 and the metal-sprayed electrode 5A or 5B at each end in y-direction. The two recesses 11 may be located at different ends in x-direction that are diagonal to each other on the xy plane of a film capacitor device 30 or may be located at ends in y-direction at the same end in x-direction. The structure according to another embodiment (not shown) may include three recesses 11 in total, which are two recesses 11 between the film stack 4 and the metal-sprayed electrode 5A at each end in y-direction and one recess 11 between the film stack 4 and the metal-sprayed electrode 5B at one end in y-direction.

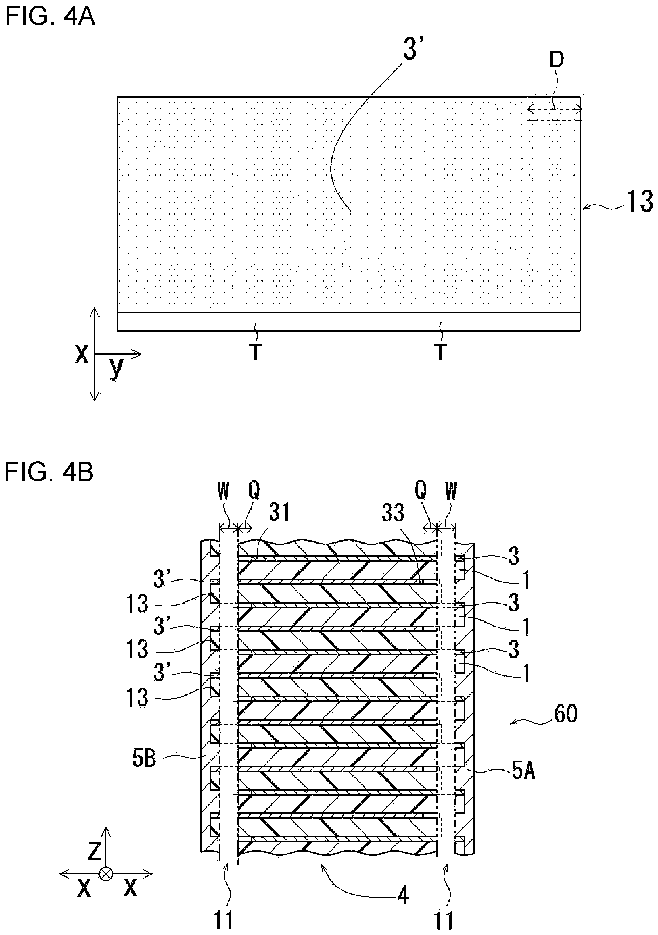

Another embodiment will now be described. In the above embodiments, the film stack 4 includes the dielectric films 1 and 2 that are stacked alternately in 180° opposite orientations in x-direction. The dielectric films 1 and 2 thus have the same structure but different orientations. In the present embodiment, the film stack 4 includes the dielectric film 1 and a dielectric film 13 that are stacked alternately but have their edge insulation areas T at one end in x-direction in the alternately opposite orientations. As shown in FIG. 4A, the dielectric film 13 includes a solid metal layer 3' with a solid pattern that covers the overall area of one surface of the base film except the edge insulation area T. As shown in FIG. 4B, the film stack 4 includes, on its two ends in x-direction, metal-sprayed electrodes 5A and 5B. The metal-sprayed electrode 5A (first metal electrode) is electrically connected to the common metal layer 3c on the dielectric film 1. The metal-sprayed electrode 5B (second metal electrode) is electrically connected to the solid metal layer 3' on the dielectric film 13.

The structure in the present embodiment may have a recess 11 in an upper (in x-direction) right (in y-direction) end in FIG. 4A to define a space between an end 33 of the solid metal layer 3' and the metal-sprayed electrode 5A. The structure may also have a recess 11 in an upper (in x-direction) left (in y-direction) end in the figure. This structure allows insulation of at least one metal strip 3a at an end in y-direction on the dielectric film 1 in the same manner as in the above embodiments. The structure may further have a recess 11 in a lower (in x-direction) left or right (in y-direction) end in the figure.

As described above, the number of recesses 11 and their positions may be varied depending on the position and the arrangement pattern of each metal film that serves as an internal electrode, as in the film capacitor devices 30, 40, and 50 in FIGs. 3A to 3C and a film capacitor device 60 in FIGs. 4A and 4B. A film capacitor using the film capacitor device 30, 40, 50, or 60 that differs in the number of recesses 11 and their positions may produce the same advantageous effects and functions as a film capacitor including the above film capacitor device 10, 20, 70, 80, or 90.

In the film capacitor device according to each of the above embodiments, the recesses 11 separate and electrically insulate one or two of the metal strips 3a at each end in y-direction (second direction) from the metal-sprayed electrode 5A or 5B. This structure reduces the capacitance loss at around the cut surface of the stack (each end in y-direction) as compared with a known film capacitor including a device with oblique insulation margins. In other words, the film capacitor device according to each of the above embodiments may be used to form a stacked film capacitor with less capacitance loss at the cut surface.

The present disclosure may be implemented in the following forms.

A film capacitor device according to one or more embodiments of the present disclosure includes a film stack being rectangular, a first metal electrode, and a second metal electrode. The film includes a plurality of dielectric films being stacked. Each of the plurality of dielectric films including a metal layer on a surface of the dielectric film and includes, at an edge of the surface of the dielectric film in a first direction, an edge insulation area continuously extending in a second direction perpendicular to the first direction. The plurality of dielectric films include adjacent dielectric films in 180° opposite orientations in the first direction on the surface and alternate dielectric films having the edge insulation areas overlapping in a plan view. The first metal electrode and the second metal electrode are on a pair of end faces of the film stack in the first direction. The metal layer is electrically connected to at least the first metal electrode or the second metal electrode. The metal layer electrically connected at least to the first metal electrode includes a common metal layer and a plurality of metal strips. The common metal layer is located on another end of the surface in the first direction and extends in the second direction. The plurality of metal strips extend in the first direction and are electrically connected to the common metal layer. At least one of a pair of end faces of the film stack in the second direction includes a recess continuously extending in a direction in which the plurality of dielectric films are stacked and separating the film stack from the first metal electrode.

The stacked film capacitor device according to one or more embodiments of the present disclosure has less capacitance loss in a cut portion of the film stack cut in a predetermined direction.

Although the embodiments of the present disclosure have been described in detail, the present disclosure is not limited to the above embodiments, and may be modified or changed variously without departing from the spirit and scope of the present disclosure. The components described in the above embodiments may be entirely or partially combined as appropriate unless any contradiction arises.

### Reference Signs List

- 1, 2, 13: dielectric film
- 3: metal layer
- 3a: metal strip
- 3b: connecting portion
- 3c: common metal layer
- 3': solid metal layer
- 4: film stack
- 5A, 5B: metal-sprayed electrode
- 10: film capacitor device
- 11: recess
- S: insulation margin
- T: edge insulation area

## Claims

1. A film capacitor device, comprising:
a film stack being rectangular and including a plurality of dielectric films being stacked, each of the plurality of dielectric films including a metal layer on a surface of the dielectric film and including, at an edge of the surface of the dielectric film in a first direction, an edge insulation area continuously extending in a second direction perpendicular to the first direction, the plurality of dielectric films including adjacent dielectric films in 180° opposite orientations in the first direction on the surface and alternate dielectric films having the edge insulation areas overlapping in a plan view;
a first metal electrode; and
a second metal electrode, the first metal electrode and the second metal electrode being on a pair of end faces of the film stack in the first direction, the metal layer being electrically connected to at least the first metal electrode or the second metal electrode,
wherein the metal layer electrically connected at least to the first metal electrode includes a common metal layer and a plurality of metal strips, the common metal layer is located on another end of the surface in the first direction and extends in the second direction, and the plurality of metal strips extend in the first direction and are electrically connected to the common metal layer, and
at least one of a pair of end faces of the film stack in the second direction includes a recess continuously extending in a direction in which the plurality of dielectric films are stacked and separating the film stack from the first metal electrode.

2. The film capacitor device according to claim 1, wherein
the metal layer electrically connected to the first metal electrode further includes a connecting portion connecting the common metal layer and the plurality of metal strips, and
the connecting portion has a length in the second direction less than a length of each of the plurality of metal strips in the second direction.

3. The film capacitor device according to claim 1 or claim 2, wherein
the metal layer electrically connected to the second metal electrode includes a solid metal layer on an overall area of the surface of each of the plurality of dielectric film except the edge insulation area.
